# EUROPEAN PATENT SPECIFICATION

(11) **EP 3 960 436 B1**
(45) Date of publication and mention of the grant of the patent: **19.07.2023**
(21) Application number: 21194161.2
(22) Date of filing: 31.08.2021
(51) Int. Cl.: B29D 30/52, B29D 30/60, B60C 11/00

(54) **TIRE WITH COMPOSITE TREAD AND METHOD OF MAKING**
REIFEN MIT VERBUNDLAUFFLÄCHE UND VERFAHREN ZUR HERSTELLUNG
PNEU AVEC BANDE DE ROULEMENT COMPOSITE ET SON PROCÉDÉ DE FABRICATION

(30) Priority: 01.09.2020 US 202063073139 P; 23.06.2021 US 202117355332
(43) Date of publication of application: 02.03.2022
(73) Proprietor: The Goodyear Tire & Rubber Company, Akron, OH 44316 (US)
(72) Inventor: PHILLIPSON, Joshua Aaron, Brecksville, 44141 (US); DYRLUND, Christopher David, Canton, 44705 (US); DELANEY, Duane Thomas, North Canton, 44720 (US); ROGENSKI, Elizabeth Amelia, Atwater, 44201 (US); SKURICH, Michael Stefan, Canton, 44718 (US); KAES, Christian, L-9184 Schrondweiler (LU)
(74) Representative: Kutsch, Bernd

(56) References cited:
- EP-A1- 3 670 140
- EP-A1- 3 670 168
- US-A1- 2020 198 398

## Description

### Field of the Invention

The invention relates in general to tire manufacturing, and more particularly to a method for forming a composite tread or tire component.

### Background of the Invention

Tire manufacturers have progressed to more complicated designs due to an advance in technology as well as a highly competitive industrial environment. In particular, tire designers seek to use multiple rubber compounds in a tire component such as the tread in order to meet customer demands. Using multiple rubber compounds per tire component can result in a huge number of compounds needed to be on hand for the various tire lines of the manufacturer. For cost and efficiency reasons, tire manufacturers seek to limit the number of compounds available, due to the extensive costs associated with each compound. Each compound typically requires the use of a banbury mixer, which involves expensive capital expenditures. Furthermore, Banbury mixers have difficulty mixing up tough or stiff rubber compounds. The compounds generated from the banbury mixers are typically shipped to the tire building plants, thus requiring additional costs for transportation. The shelf life of the compounds is not finite, and if not used within a certain time period, is scrapped.

Furthermore, to meet the demands of production, it is desired to change from one rubber compound to another within a single component without a stop in the building of the component. Stopping a build to change rubber material causes a delay in the tire construction process. Tire designers seek a method to transition from one rubber compound to another, or to change the proportion of one rubber compound to another within a certain zone of the tire component, dynamically, or "on the fly", during component construction to save time and reduce complexity in the tire manufacturing process.

Thus, it is desired to have an improved method and apparatus which provides independent flow of two or more compounds from a single application head. More particularly, it is desired to be able to make a custom tire tread or tire component using only two tire compounds, which can be used to simulate multiple compounds having a variety of properties.

EP 3 670 140 A2 describes a method and a tire in accordance with the preambles of independent claims 1 and 10 respectively.

### Summary of the Invention

The invention relates to a method in accordance with claim 1 and to a tire in accordance with claim 10.

Dependent claims refer to preferred embodiments of the invention.

The invention provides in one aspect a method for forming a composite tread, wherein the method includes the steps of selecting a first tread compound having a first desired tread property, and selecting a second tread compound having a second desired property, forming a tread by winding a dual layer strip having a first layer formed of the first tread compound and a second layer formed of the second compound, wherein the tread has a first and second zone, wherein each zone is formed by spirally winding the dual layer strip, wherein the first zone is formed of a dual layer strip having a strip ratio of the volumetric proportion of the first compound to the second compound used to form the dual layer strip, wherein the second zone has a different strip ratio than the first zone by varying the volumetric proportion of the first compound to the second compound, and wherein the cross-sectional shape of the first layer is triangular.

The invention provides in a second aspect a tire having a component, wherein the component is formed from a continuous spiral winding of a dual layer strip having a first layer formed of a first compound, and a second layer formed of a second compound, wherein the cross-sectional shape of the first layer is triangular. The tire component may be a tread, a sidewall, an apex, wedge, or a chafer. Preferably, the cross-sectional shape of the second layer is a trapezoid. More preferably, the dual layer strip has a trapezoidal cross-sectional shape.

In a preferred aspect of the method or tire, the first desired tread property is different than the second tread property.

In a preferred aspect of the method or tire, the first compound has a first tread property of relatively high stiffness, and the second compound is selected for high traction.

In a preferred aspect of the method or tire, the first compound has a first tread property of relatively high stiffness, and the second compound is selected for high traction.

In a preferred aspect of the method or tire, a first tread property of a first zone is determined by using linear interpolation of the strip ratio.

In a preferred aspect of the method or tire, a second tread property of a first zone is determined by using a linear interpolation of the strip ratio.

In a preferred aspect of the invention, the dual layer strip has a thickness in a range of from 0.1 to 3 mm, preferably 0.2 to 2.5 mm or 0.5 to 2.0 mm. The first layer of the dual layer strip preferably has a thickness in a range of from 0.1 to 3 mm, preferably 0.2 to 2 mm or 0.5 to 1.5 mm; and the second layer of the dual layer strip preferably has a thickness in a range of from 0.1 to 3 mm, preferably 0.2 to 2 mm or 0.5 to 1.5 mm.

In a preferred aspect of the invention, the dual layer strip has a strip width in a range of from 10 to 25 mm.

### Definitions

"Aspect Ratio" means the ratio of a tire's section height to its section width.

"Axial" and "axially" means the lines or directions that are parallel to the axis of rotation of the tire.

"Circumferential" means lines or directions extending along the perimeter of the surface of the annular tread perpendicular to the axial direction.

"Ply" means a cord-reinforced layer of elastomer-coated, radially deployed or otherwise parallel cords.

"Radial" and "radially" mean directions radially toward or away from the axis of rotation of the tire.

"Tangent delta", or "tan delta," is a ratio of the shear loss modulus, also known as G", to the shear storage modulus (G'). These properties, namely the G', G" and tan delta, characterize the viscoelastic response of a rubber test sample to a tensile deformation at a fixed frequency and temperature, measured at 100°C.

"Laminate structure" means an unvulcanized structure made of one or more layers of tire or elastomer components such as the innerliner, sidewalls, and optional ply layer.

### Brief Description of the Drawings

The invention will be described by way of example and with reference to the accompanying drawings in which:
FIG. 1A is a cross-sectional view of a tire tread formed of a 100% of a first compound A;
FIG. 1B is a cross-sectional view of a tire tread formed of multiple layers of a dual layer strip, wherein the strip has a first and second layer, wherein the first layer is formed of a first compound A and the second layer is formed of a second compound B, wherein the overall ratio of the first compound to the second compound is 70/30;
FIG. 1C is a cross-sectional view of a tire tread formed of multiple layers of a dual layer strip, wherein the strip has a first and second layer, wherein the first layer is formed of a first compound A and the second layer is formed of a second compound B, wherein the overall ratio of the first compound to the second compound is 40/60;
FIG. 1D is a cross-sectional view of a tire tread formed of a 100% of a second compound B;
FIG. 2A is a front perspective view of a dual layer strip, wherein the dual layer strip has a bottom layer formed of 90% of a first compound and a top layer formed of 10% of a second compound;
FIG. 2B is a front perspective view of a dual layer strip having a bottom layer formed of 95% of a first compound and 5% of a second compound;
FIG. 3 illustrates a chart showing the proportion of compound A to compound B in a dual layer strip in order to emulate many different compounds using only two compounds. The emulated compounds have properties in proportion to the ratio of the compound A to compound B;
FIG. 4A is a perspective view of an apparatus for forming a dual strip, while Fig. 4B is a perspective close-up cross-sectional view of a nozzle used to form the dual strip; and
FIG. 5 is a close-up cross-sectional view of an additional embodiment of a tread formed from a dual strip having a different cross-sectional shape.

### Detailed Description of Example Embodiments the Invention

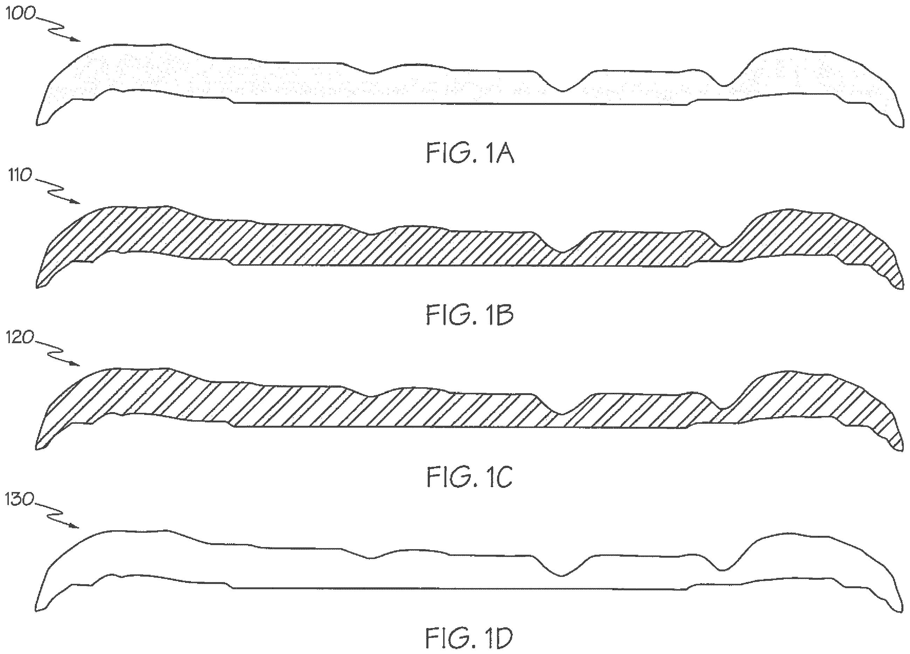

FIG. 1A illustrates a cross-sectional view of a first embodiment of a tire tread 100. The tire tread 100 is formed of 100% of a first compound A, wherein the compound A is selected for a first desired property of the tread. In this example, compound A is selected for the property of high rolling resistance, and a tread compound having a highly loaded silica tread formulation is used for the desired tread characteristics. FIG. 1D illustrates a second embodiment of a tire tread 130 formed of a second compound B, wherein the compound B is selected for a second desired property of the tread. In this example, the second desired tread property is high dry traction, and a rubber compound selected for dry traction having high amounts of carbon black is utilized.

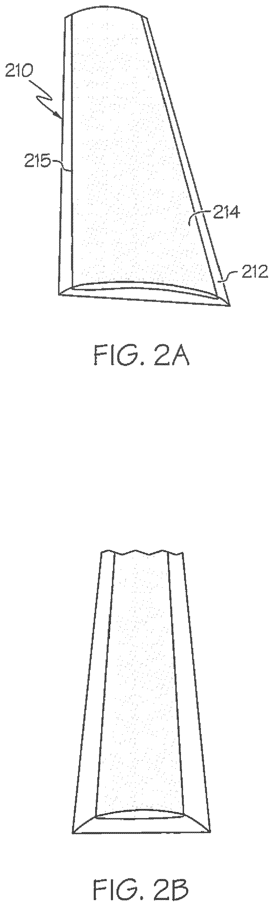

FIG. 1B illustrates a cross-sectional view of a third embodiment of a tire tread 110 where it is desired to have a tire tread having two desired tread properties. Thus, it is desired to have a tread composition having high rolling resistance and high dry traction. The tire tread 110 is formed of an overall tread composition of 60% compound A and 40% compound B. The tire tread 110 is formed by winding a continuous dual layer strip 210 onto a tire building drum or onto a shaped green carcass. The continuous dual layer strip 210 is shown in FIG. 2A, and has a first base layer 212 formed of compound A and a second layer 214 formed of compound B. The overall compound ratio of the tire tread is 60% compound A and 40% compound B, and is accomplished by spirally winding a dual layer strip having a ratio of 60% compound A to 40% compound B. FIG. 2B illustrates a second dual layer strip having a higher percentage of compound A to compound B.

FIG. 1C illustrates a fourth embodiment of a tread 120 formed of a dual layer strip having a 30% compound A to 70% compound B ratio, thus to form an overall ratio for the tread of 30% A to 70% B.

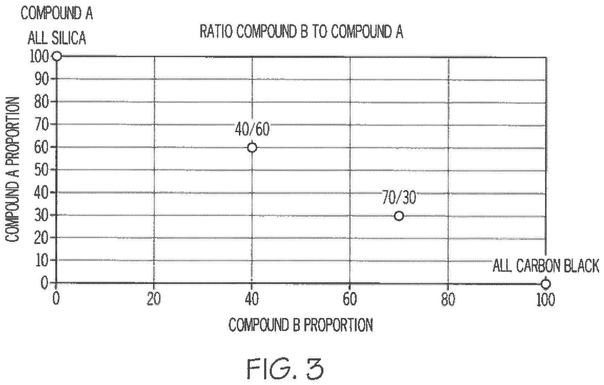

The tread compound ratios of FIGS. 1A through 1D are illustrated in FIG. 3. The examples of the various tread configurations shown in FIGS. 1A through 1D illustrate how the use of two different compounds selected for two different desired properties, can be used to generate a tread formed of different zones. Each zone of the tread can be formed of 100% of compound A or 100% of compound B, or a zone having both compounds A and compound B wherein the compounds A and B are not mixed together. This zone is accomplished by the use of a dual layer strip 210 as shown in FIG. 2A that has two discrete layers of compound A and compound B, and which the ratio of the two compounds in the strip can be varied in real time. Thus, the invention provides for a tread formed of multiple zones thereby simulating the use of many compounds by varying the volume ratio of compound A to compound B. It is important to note that the compound properties of the dual layer can be determined by interpolating between the volumetric ratios of the two compounds. Thus, 100% of compound A will give 100% of the desired property, while 50% of compound A will result in 50% of the desired compound property. In varying the volumetric amount of compound A and compound B, the simulation of multiple compounds can be provided.

In FIG. 3, the two selected compounds A and B are shown. By varying the ratio of compound A to compound B of the strip, results in the variation of the compound properties. Two compounds can be selected for the desired properties such as rolling resistance, stiffness, electrical conductivity, thermal conductivity, wet traction, dry traction, and treadwear. The desired tread properties can then be determined by selecting the desired ratio of the two compounds. The property ratio is determined by interpolating between by varying the ratio of two coextruded and spiral laminated compounds. Thus, structuring two different compounds with mutually exclusive performance properties layered in for instance 0 to 3 mm configurations yields performances of non-existent compounds between the two parent compounds. Compound ratios in thin (0 to 3 mm) alternating layers oriented at angles from 0 to 60° to the application surface in controlled proportions ranging from 0:100 to 100:0 permits the introduction of a definable compromise of tire performances.

Multiple compound layering with layer thickness dimensions less than 3 mm enables the tire component to leverage the properties of each compound while minimizing compound to compound interface durability issues because the thin cross sections of each layer are individually exposed to low stress concentration. Dynamically tuning the ratio of the two parent compounds across the component permits fine tuning of the tire zone performance contribution and delivers a previously unachievable performance.

The 0 to 3 mm thick, preferably 0.2 mm to 1.5 mm thick alternating layers of two compounds are achieved with a dual layer strip in a range of 0 to 3 mm in thick and preferably 10 mm to 25 mm wide comprising two compounds with various but definable angles, curves, and proportions of division which is then circumferentially or spirally built-up or laminated on an application surface forming a green tire component. Duplex spiral lamination of two parent compounds to yield the properties of in-between compounds reduces need for compound options and reduces plant complexity while enhancing tire design tunability and reducing development iteration timelines. Plus, different areas of the tire could receive different ratios of the parent compounds to maximize performance contribution.

### Dual Strip Forming Apparatus

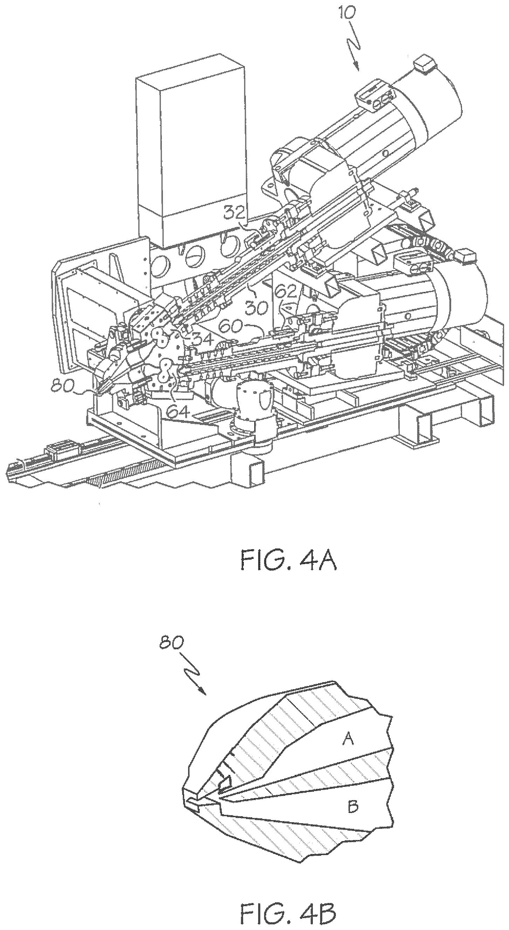

The apparatus used to form the continuous dual layer strip is shown in FIGS. 4A and 4B. The apparatus can form the coextruded strip while instantaneously varying the ratio of the first compound to the second compound. The dual strip forming apparatus 10 includes a first extruder 30 and a second extruder 60, preferably arranged vertically in close proximity. The first extruder 30 has an inlet 32 for receiving a first rubber composition A, while the second extruder 60 has an inlet 62 for receiving a second rubber composition B. Compound A is extruded by the first extruder 60 and then pumped by the first gear pump 64 into a nozzle 80, while at the same time Compound B is extruded by the second extruder 30 and then pumped by the second gear pump 34 into the nozzle 80. The volume ratio of compound A to compound B may be changed by varying the ratio of the speed of gear pump of compound A to the speed of gear pump of compound B. The dual coextruded strip forming apparatus 10 can adjust the speed ratios on the fly, and due to the small residence time of the coextrusion nozzle, the apparatus has a fast response to a change in the compound ratios. This is due to the low volume of the coextrusion zone.

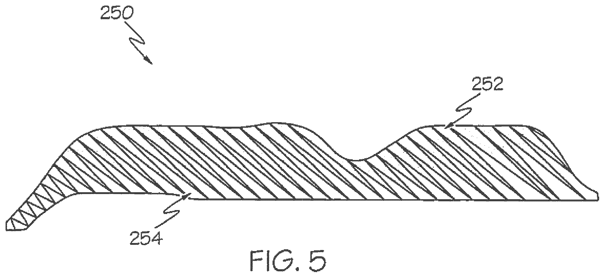

The nozzle 80 forms two discrete layers 212, 214 joined together at an interface 215. The nozzle can be configured to provide different cross-sectional configurations of the strip. The strip of FIG. 2A and 2B illustrates one embodiment. The duplex strip 250 as shown in FIG. 5 may be used. The duplex strip 250 has a first layer that has a first triangular cross-sectional shape 252, and an inverted triangle 254 forming a second layer. The duplex strips 250 may be spirally wound to form a tread. The first layer compound 252 may be selected for stiffness, while the second layer compound 254 may be selected for traction. The duplex strip 250 is oriented such that the traction layer is located radially outward of the first layer formed of a stiff compound. As shown in FIG. 5, the duplex strips are spirally wound at an angle. Thus, the tire tread as shown in FIG. 5 results in more traction compound near the contact patch and more stiffness compound below the nonskid while minimizing the stiff compound cross sections for crack resistance.

## Claims

1. A method for forming a tire composite tread, the method comprising the steps of: selecting a first tread compound having at least one first desired property, and selecting a second, different tread compound having at least one second desired property, forming a composite tread (100, 110, 120, 130) by winding a dual layer strip (210) having a first layer (212) formed of the first tread compound and a second layer (214) formed of the second compound, wherein the composite tread (100, 110, 120, 130) has a first and second zone, wherein each zone is formed by spirally winding the dual layer strip (210), wherein the first zone is formed of said dual layer strip (210) having a strip ratio of the volumetric proportion of the first tread compound to the second tread compound used to form the dual layer strip (210), and wherein the second zone has a different strip ratio of the volumetric proportion of the first tread compound to the second tread compound used to form the dual layer strip (210) than the first zone by varying the volumetric proportion of the first tread compound to the second tread compound, **characterized in that** the cross-sectional shape of the first layer (212) is at least substantially triangular.

2. The method of claim 1 wherein the strip ratio of the volumetric proportion of the first tread compound to the second tread compound used to form the dual layer strip (210) is varied while spirally winding the dual layer strip (210).

3. The method of claim 1 or 2 comprising the steps of forming a tread rib while continuously varying the volumetric proportion of the first tread compound to the second tread compound used to form the dual layer strip (210).

4. The method of at least one of the previous claims wherein the dual layer strip (210) is produced by extruding said first and second layers (212, 214) as two adjacent discrete layers of the first tread compound and the second tread compound respectively.

5. The method of at least one of the previous claims wherein the strip ratio of the volumetric proportion of the first tread compound to the second tread compound used to form the dual layer strip (210) is varied when producing the dual layer strip (210) by changing the ratio of the speed of a first gear pump (34) to the speed of a second gear pump (64).

6. The method of at least one of the previous claims wherein the at least one first desired tread property is selected from the group consisting of: rolling resistance, stiffness, electrical conductivity, thermal conductivity, wet traction, dry traction, and wear; and/or wherein the second desired tread property is selected from the group consisting of: rolling resistance, stiffness, electrical conductivity, thermal conductivity, wet traction, dry traction, and wear.

7. The method of at least one of the previous claims wherein the composite tread (100, 110, 120, 130) further comprises a third zone formed of only the first tread compound and/or a fourth zone formed of only the second tread compound.

8. The method of at least one of the previous claims wherein the second tread compound comprises a rubber composition having a shear storage modulus G' measured at 1% strain and 100 ºC according to ASTM D5289 ranging from 23 to 31 MPa.

9. The method of at least one of the previous claims wherein the first tread compound has a higher stiffness than the second tread compound and/or wherein the second tread compound has a higher dry or wet traction than the first tread compound,

10. A tire having a component, preferably a tread, wherein the component (100, 110, 120, 130) is formed from a continuous spiral winding of a dual layer strip (210) having a first layer (212) formed of a first compound and a second layer (214) formed of a second, different compound, **characterized in that** the cross-sectional shape of the first layer (212) is at least substantially triangular.

11. The tire of claim 10 wherein the cross-sectional shape of the second layer (214) is at least substantially trapezoidal.

12. The tire of 10 or 11 wherein the dual layer strip (210) has an overall trapezoidal cross-sectional shape.

13. The tire of at least one of the claims 10 to 12 wherein the component, preferably the tread, is formed by spirally winding the dual layer strip (210) of the first layer (212) of the first compound, the first compound having a higher stiffness than the second compound, and of the second layer (214) of the second compound, the second compound having a higher wet or dry traction than the first compound, wherein the spirally winding the dual layer strip (210) is such that the second layer (214) is located radially outward of the first layer (212) in the component.

14. The tire of at least one of the claims 10 to 13 wherein the dual layer strips (210) are overlapped with each other.

15. The tire of at least one of the claims 10 to 14 wherein the dual layer strips (210) are applied at an angle in the range of from 0 to 60 degrees, preferably 1 to 10 degrees, with respect to the circumferential direction of the tire.

## Patentansprüche

1. Verfahren zur Ausbildung einer Reifenverbundlauffläche, wobei das Verfahren die Schritte umfasst: das Auswählen einer ersten Laufflächenverbindung mit mindestens einer ersten gewünschten Eigenschaft, und das Auswählen einer zweiten, unterschiedlichen Laufflächenverbindung mit mindestens einer zweiten gewünschten Eigenschaft; das Ausbilden einer Verbundlauffläche (100, 110, 120, 130) durch Aufwickeln eines Doppelschichtstreifens (210), der eine erste Schicht (212) aus der ersten Laufflächenverbindung und eine zweite Schicht (214) aus der zweiten Verbindung hat, wobei die Verbundlauffläche (100, 110, 120, 130) eine erste und eine zweite Zone aufweist, wobei jede Zone durch spiralförmige Wicklung des Doppelschichtstreifens (210) gebildet wird, wobei die erste Zone aus dem Doppelschichtstreifen (210), der ein Streifenverhältnis des volumetrischen Anteils der ersten Laufflächenverbindung zu der zweiten Laufflächenverbindung, die zur Bildung des Doppelschichtstreifens (210) verwendet wird, aufweist, und wobei, durch Variation des volumetrischen Anteils der ersten Laufflächenverbindung zur zweiten Laufflächenverbindung, die zweite Zone ein anderes Streifenverhältnis des volumetrischen Anteils der ersten Laufflächenverbindung zu der zweiten Laufflächenverbindung, die zur Bildung des Zweischichtstreifens (210) verwendet wird, aufweist, **dadurch gekennzeichnet, dass** die Querschnittsform der ersten Schicht (212) zumindest im Wesentlichen dreieckig ist.

2. Verfahren nach Anspruch 1, wobei das Streifenverhältnis des volumetrischen Anteils der ersten Laufflächenverbindung zu der zweiten Laufflächenverbindung, die zur Bildung des Doppelschichtstreifens (210) verwendet wird, während das spiralförmig Wickeln des Doppelschichtstreifens (210), variiert wird.

3. Verfahren nach Anspruch 1 oder 2, das die Schritte der Ausbildung einer Laufflächenrippe umfasst, während das volumetrische Verhältnis der ersten Laufflächenverbindung zu der zweiten Laufflächenverbindung, die zur Bildung des Zweischichtstreifens (210) verwendet wird, kontinuierlich variiert wird.

4. Verfahren nach mindestens einem der vorhergehenden Ansprüche, wobei das Doppelschichtstreifen (210) durch Extrudieren der ersten und zweiten Schichten (212, 214) als zwei benachbarte diskrete Schichten der ersten Laufflächenverbindung bzw. der zweiten Laufflächenverbindung hergestellt wird.

5. Verfahren nach mindestens einem der vorhergehenden Ansprüche, wobei das Streifenverhältnis des volumetrischen Anteils der ersten Laufflächenverbindung zu der zweiten Laufflächenverbindung, die zur Bildung des Zweischichtstreifens (210) verwendet wird, bei der Herstellung des Zweischichtstreifens (210), durch Änderung des Verhältnisses der Drehzahl einer ersten Zahnradpumpe (34) zur Drehzahl einer zweiten Zahnradpumpe (64), variiert wird.

6. Verfahren nach mindestens einem der vorhergehenden Ansprüche, wobei die zumindest eine erste gewünschte Laufflächeneigenschaft aus der Gruppe ausgewählt ist, die aus Rollwiderstand, Steifigkeit, elektrische Leitfähigkeit, Wärmeleitfähigkeit, Nasstraktion, trockene Traktion, und Verschleiß, besteht; und/oder wobei die zweite gewünschte Laufflächeneigenschaft aus der Gruppe ausgewählt wird, die aus Rollwiderstand, Steifigkeit, elektrischer Leitfähigkeit, Wärmeleitfähigkeit, Nasstraktion, trockener Traktion und Verschleiß besteht.

7. Verfahren nach mindestens einem der vorhergehenden Ansprüche, wobei die Verbundlauffläche (100, 110, 120, 130) weiterhin eine dritte Zone umfasst, die nur aus der ersten Laufflächenverbindung gebildet ist, und/oder einer vierten Zone, die nur aus der zweiten Laufflächenverbindung gebildet ist.

8. Verfahren nach mindestens einem der vorhergehenden Ansprüche, wobei die zweite Laufflächenverbindung eine Gummizusammensetzung mit einem bei 1 % Dehnung und 100 °C gemäß ASTM D5289 gemessenen Scherspeichermodul G' umfasst, das zwischen 23 und 31 MPa liegt.

9. Verfahren nach mindestens einem der vorhergehenden Ansprüche, wobei die erste Laufflächenverbindung eine höhere Steifigkeit als die zweite Laufflächenverbindung aufweist, und/oder wobei die zweite Laufflächenverbindung eine höhere trockene oder nasse Traktion als die erste Laufflächenverbindung aufweist,

10. Reifen der ein Bauteil, vorzugsweise eine Lauffläche hat, wobei das Bauteil (100, 110, 120, 130) aus einer kontinuierlichen Spiralwicklung eines Zweischichtstreifens (210) gebildet ist, der eine aus einer ersten Verbindung gebildete erste Schicht (212) und eine aus einer zweiten, unterschiedlichen Verbindung gebildete zweite Schicht (214) hat, **dadurch gekennzeichnet, dass** die Querschnittsform der ersten Schicht (212) zumindest im Wesentlichen dreieckig ist.

11. Reifen nach Anspruch 10, wobei die Querschnittsform der zweiten Schicht (214) zumindest im Wesentlichen trapezförmig ist.

12. Reifen nach Anspruch 10 oder 11, wobei der Zweischichtstreifen (210) insgesamt eine trapezförmige Querschnittsform aufweist.

13. Reifen nach mindestens einem der Ansprüche 10 bis 12, wobei das Bauteil, vorzugsweise die Lauffläche, durch spiralförmige Wicklung des Doppelschichtstreifens (210) der ersten Schicht (212) der ersten Verbindung gebildet wird, wobei die erste Verbindung eine höhere Steifigkeit als die zweite Verbindung aufweist, und der zweiten Schicht (214) der zweiten Verbindung, wobei die zweite Verbindung eine höhere Nass- oder Trockenzugkraft als die erste Verbindung aufweist, wobei die spiralförmige Wicklung des Doppelschichtstreifens (210) derart ist, dass die zweite Schicht (214) radial außerhalb der ersten Schicht (212) im Bauteil liegt.

14. Reifen nach mindestens einem der Ansprüche 10 bis 13, wobei die Zweischichtstreifen (210) miteinander überlappt sind.

15. Reifen nach mindestens einem der Ansprüche 10 bis 14, wobei die Zweischichtstreifen (210) unter einem Winkel in einem Bereich von 0 bis 60 Grad, vorzugsweise 1 bis 10 Grad, bezüglich der Umfangsrichtung des Reifens aufgebracht sind.

## Revendications

1. Procédé pour la formation d'une bande de roulement composite d'un bandage pneumatique, le procédé comprenant les étapes dans lesquelles : on sélectionne un premier composé de bande de roulement qui possède au moins une première propriété désirée, et on sélectionne un deuxième composé de bande de roulement différent qui possède au moins une deuxième propriété désirée ; on forme une bande de roulement composite (100, 110, 120, 130) en enroulant une bande à double couche (210) qui possède une première couche (212) qui est constituée du premier composé de bande de roulement et une deuxième couche (214) qui est constituée du deuxième composé ; dans lequel la bande de roulement composite (100, 110, 120, 130) possède une première et une deuxième zone ; dans lequel chaque zone est formée par enroulement en spirale de la bande à double couche (210) ; dans lequel la première zone est constituée de ladite bande à double couche (210) qui possède un rapport de bande de la proportion volumétrique du premier composé de bande de roulement au deuxième composé de bande de roulement que l'on utilise pour la formation de la bande à double couche (210) ; et dans lequel la deuxième zone possède un rapport de bande de la proportion volumétrique du premier composé de bande de roulement au deuxième composé de bande de roulement que l'on utilise pour la formation de la bande à double couche (210) différent de celui de la première zone en faisant varier la proportion volumétrique du premier composé de bande de roulement au deuxième composé de bande de roulement, **caractérisé en ce que** la configuration en section transversale de la première couche (212) est au moins essentiellement triangulaire.

2. Procédé selon la revendication 1, dans lequel on fait varier le rapport de bande de la proportion volumétrique du premier composé de bande de roulement au deuxième composé de bande de roulement que l'on utilise pour la formation de la bande à double couche (210) tout en enroulant en spirale la bande à double couche (210).

3. Procédé selon la revendication 1 ou 2, qui comprend les étapes de formation d'une nervure de bande de roulement tout en faisant varier en continu la proportion volumétrique du premier composé de bande de roulement au deuxième composé de bande de roulement que l'on utilise pour la formation de la bande à double couche (210).

4. Procédé selon au moins une des revendications précédentes, dans lequel on obtient la bande à double couche (210) par extrusion de ladite première et de ladite deuxième couche (212, 214) sous la forme de deux couches discrètes adjacentes du premier composé de bande de roulement et du deuxième composé de bande de roulement, respectivement.

5. Procédé selon au moins une des revendications précédentes, dans lequel on fait varier le rapport de bande de la proportion volumétrique du premier composé de bande de roulement au deuxième composé de bande de roulement que l'on utilise pour la formation de la bande à double couche (210) au cours de la production de la bande à double couche (210) en modifiant le rapport entre la vitesse d'une première pompe à engrenages (34) et la vitesse d'une deuxième pompe à engrenages (64).

6. Procédé selon au moins une des revendications précédentes, dans lequel ladite au moins une première propriété de bande de roulement désirée est choisie parmi le groupe constitué par: la résistance au roulement, la rigidité, la conductibilité électrique, la conductibilité thermique, la traction sur terrain humide, la traction sur terrain sec, et l'usure; et/ou dans lequel la deuxième propriété de bande de roulement désirée est choisie parmi le groupe constitué par: la résistance au roulement, la rigidité, la conductibilité électrique, la conductibilité thermique, la traction sur terrain humide, la traction sur terrain sec, et l'usure.

7. Procédé selon au moins une des revendications précédentes, dans lequel la bande de roulement composite (100, 110, 120, 130) comprend en outre une troisième zone qui est constituée uniquement du premier composé de bande de roulement et/ou une quatrième zone qui est constituée uniquement du deuxième composé de bande de roulement.

8. Procédé selon au moins une des revendications précédentes, dans lequel le deuxième composé de bande de roulement comprend une composition de caoutchouc qui possède un module de stockage de cisaillement G', que l'on mesure à une déformation de 1 % et à une température de 100 °C conformément à la norme ASTM D5289, qui se situe dans la plage allant de 23 à 31 MPa.

9. Procédé selon au moins une des revendications précédentes, dans lequel le premier composé de bande de roulement possède une rigidité qui est supérieure à celle du deuxième composé de bande de roulement et/ou dans lequel le deuxième composé de bande de roulement possède une traction sur terrain sec ou sur terrain humide qui est supérieure à celle du premier composé de bande de roulement.

10. Bandage pneumatique possédant un composant, de préférence une bande de roulement ; dans lequel on obtient le composant (100, 110, 120, 130) à partir d'un enroulement continu en spirale d'une bande à double couche (210) qui possède une première couche (212) constituée du premier composé et une deuxième couche (214) constituée d'un deuxième composé différent, **caractérisé en ce que** la configuration en section transversale de la première couche (212) est au moins essentiellement de forme triangulaire.

11. Bandage pneumatique selon la revendication 10, dans lequel la configuration en section transversale de la deuxième couche (214) est au moins essentiellement de forme trapézoïdale.

12. Bandage pneumatique selon la revendication 10 ou 11, dans lequel la bande à double couche (210) possède une configuration globale de forme trapézoïdale en section transversale.

13. Bandage pneumatique selon au moins une des revendications 10 à 12, dans lequel on obtient le composant, de préférence la bande de roulement, par enroulement en spirale de la bande à double couche (210) de la première couche (212) du premier composé, le premier composé possédant une rigidité qui est supérieure à celle du deuxième composé, et de la deuxième couche (214) du deuxième composé, le deuxième composé possédant une traction sur terrain humide ou sur terrain sec qui est plus élevée que celle du premier composé ; dans lequel l'enroulement en spirale de la bande à double couche (210) est telle que la deuxième couche (214) est située dans la direction radiale à l'extérieur de la première couche (212) dans le composant.

14. Bandage pneumatique selon au moins une des revendications 10 à 13, dans lequel les bandes à double couche (210) se chevauchent les unes les autres.

15. Bandage pneumatique selon au moins une des revendications 10 à 14, dans lequel les bandes à double couche (210) sont appliquées en formant un angle dans la plage de 0 à 60 degrés, de préférence de 1 à 10 degrés, par rapport à la direction circonférentielle du bandage pneumatique.
